Europäisches Patentamt

(19) European Patent Office

Office européen des brevets

(11) Publication number: **0 129 422**

**A2**

(12) **EUROPEAN PATENT APPLICATION**

(21) Application number: **84304047.8**

(22) Date of filing: **15.06.84**

(51) Int. Cl.³: **G 01 G 5/00**
**G 01 G 19/16, G 01 G 21/00**

(30) Priority: **17.06.83 AU 9865/83**

(43) Date of publication of application:
**27.12.84 Bulletin 84/52**

(84) Designated Contracting States:
**AT BE CH DE FR GB IT LI LU NL SE**

(71) Applicant: **Skeen, June Caroline**
**100 Queen Victoria Street**
**Bexley New South Wales 2207(AU)**

(71) Applicant: **Prgomet, Leon Stephen**
**100 Queen Victoria Street**
**Bexley New South Wales 2207(AU)**

(72) Inventor: **Prgomet, Leon Stephen**
**100 Queen Victoria Street**
**New South Wales 2207(AU)**

(74) Representative: **JENSEN & SON**
**8 Fulwood Place High Holborn**
**London WC1V 6HG(GB)**

(54) Weighing device.

(57) A combination to determine the weight of the contents of a bucket (15) of an excavator having an articulated arm (10), the weight of the contents can be calculated if the angle between the two arms (13, 14) of the articulated arm can be determined together with the pressure within the hydraulic ram 16 which pivots the base arm (13) of the articulated arm (10).

EP 0 129 422 A2

- 1 -

## WEIGHING DEVICE

The present invention relates to weighing devices and more particularly to weighing devices to determine the weight of the pay-load of a bucket of an excavator or a like implement.

There is not available a device which readily provides the weight of the contents of bucket of an excavator. This has the disadvantage that a motor lorry being loaded by means of the excavator may become over loaded in that the weight of the material being delivered to the motor lorry is only roughly estimated. If the lorry is over loaded then the operator of the lorry runs the risk of incurring government fines and additionally may run the risk of having his load rejected at the delivery end.

It is the object of the present invention to overcome or substantially ameliorate the above disadvantages.

There is disclosed herein a combination to determine the payload of a bucket of an articulated arm with the bucket adapted to receive powder or particulate matter, said arm including a base arm to be pivotally attached at one end to a prime mover, a first hydraulic ram extending between the prime mover and said arm to cause pivoting of said arm relative to said prime mover, a link pivotally attached at one end to the other end of said arm relative to said prime mover, a second hydraulic ram extending between said base arm and link so as to pivotally move said link relative to said base arm, a bucket pivotally attached to the other end of said link relative to said base arm, a third hydraulic ram extending between said link and said bucket to pivotally move said bucket relative to said link, first angle detection means to detect the angle between said base arm and link, means to determine the hydraulic pressure in the first hydraulic ram to thereby determine the force applied to said base arm by said first hydraulic ram, and means to calculate the weight of the contents in said bucket by receiving information from said first detection means and the means to detect the pressure in said first hydraulic ram.

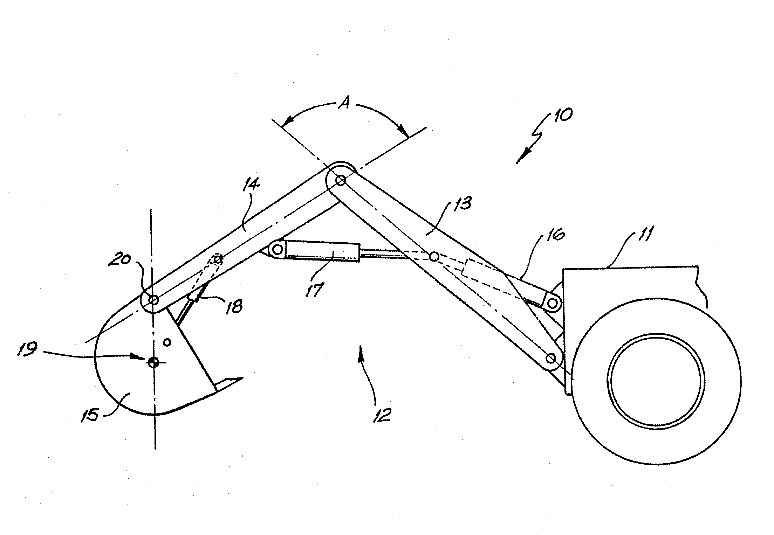

A preferred form of the present invention will now be described by way of example with reference to the accompanying drawing which schematically depicts in side elevation an excavator.

In the accompanying drawing there is schematically depicted an excavator 10 having a prime mover 11 to which is attached an articulated arm and bucket assembly 12. The bucket and arm assembly includes a base arm 13 which is pivotally attached at its lower end to the prime mover 11. The end of the arm 13 is pivotally attached to a link 14 with the bucket 15 pivotally attached to the other end of the link 14. The base arm 13 is pivotally attached to a ram 16 which determines the angle of inclination of the arm 13 while extending between the arm 13 and link 14 is a further ram 17. The position of the bucket 15 is determined by a third ram 18.

In order to determine the weight of the material located in the bucket 15, there is provided means to detect the pressure within the ram 16 which means may included a pressure transducer or line extending from the ram 16 to a pressure sensitive instrument. There would further be provided means to detect the magnitude of the angle A which angle would be fed in combination with an indication of the pressure within the ram 16, to a computer which could then determine the weight of the contents in the bucket 15 provided the center of gravity 19 is positioned at a predetermined location. The angle "A" can be determined by a variable electrical resistance element attached to the arm 13 and link 14. The resistance of the element would vary according to the relative movement of the arm 13 with respect to the link 14. Preferably the center of gravity 19 is located vertically below the pivot 20. To further accurately determine the weight of the contents in the bucket 15, the inclination of the frame of the prime mover to the horizontal should also be measured with that angle of inclination also being fed to the computer. By providing the computer with the pressure within the ram 16 and the angle A as well as the angle of inclination of the prime mover 11, the computer would have sufficient information to determine the weight of the contents within the bucket 15 given the location of the center of gravity 19.

In the above preferred form of the present invention, in order to determine the weight of the bucket 15, it is necessary to hold the bucket 15 stationary.

In a further preferred form of the present invention, it is proposed to determine the weight of the contents of the bucket 15 by measurement of the rate of the change of the angle of the arm 13 relative to the prime mover 11. This can be achieved by the simple method of applying the equation, force = mass x acceleration, to the articulated arm depicted in the attached drawing. This measurement of the rate of change of the angle of the arm 13, given a predetermined position of the bucket 15, will enable calculation of the acceleration of the bucket 15. Thus, the weight of the contents can be determined as the force applied to the bucket can be calculated from the force applied to the arm 13 by the ram 16. It is also proposed to detect any rate of change of movement of the prime mover 11 in order to adjust the above calculation should the prime mover 11 move under the influence of the hydraulic pressure applied to the ram 16. It is proposed to detect any movement of the prime mover 11 by merely fixing to the chassis of the prime mover 11, an accelerometer.

CLAIMS

1. A combination to determine the payload of a bucket of an articulated arm (10) with the bucket (15) adapted to receive powder or particulate matter, said arm including a base arm (13) to be pivotally attached at one end to a prime mover (11), a first hydraulic ram (16) extending between the prime mover (11) and said arm (13) to cause pivoting of said arm (13) relative to said prime mover (11), a link (14) pivotally attached at one end to the other end of said arm (13) relative to said prime mover (11), a second hydraulic ram (17) extending between said base arm (13) and link (14) so as to pivotally move said link (14) relative to said base arm (13), a bucket (15) pivotally attached to the other end of said link (14) relative to said base arm (13), a third hydraulic ram (18) extending between said link (14) and said bucket (15) to pivotally move said bucket (15) relative to said link (14), first angle detection means to detect the angle between said base arm (13) and link (14), means to determine the hydraulic pressure in the first hydraulic ram (16) to thereby determine the force applied to said base arm (13) by said first hydraulic ram (16), and means to calculate the weight of the contents in said bucket (15) by receiving information from said first detection means and the means to detect the pressure in said first hydraulic ram (16).

2. A combination to determine the payload of a bucket of an articulated arm (10), said combination comprising a base arm (13) to be pivotally attached at one end to a prime mover (11), a first ram (16) extending between said prime mover (11) and base arm (13) to cause pivoting movement of said base arm (13) relative to said prime mover (11), a link (14) pivotally attached at one end to the other end of said base arm (13) relative to said prime mover (11), a second hydraulic ram (17) extending between said link (14) and said base arm (13) to cause pivoting of said link (14) relative to said base arm (13), a bucket (15) to receive powder or particulate matter, said bucket (15) being pivotally attached to the other end of said link (14) relative to said base arm (13), a third hydraulic ram (18) extending between said link (14) and bucket (15) to cause pivoting of said bucket (15) relative to said link (14), pressure detection means to detect the pressure in said first hydraulic ram (16), and means to detect the rate of change of the angle of said base arm (13) relative to said prime mover (11), and means to calculate the weight of the contents within said bucket (15), given a predetermined position of the bucket (15) relative to said prime mover (11), from the rate of change of angle of said base arm (13).

3.    A weighing device substantially as hereinbefore described with reference to the accompanying drawings.